# EUROPÄISCHE PATENTANMELDUNG

(11) **EP 2 930 322 A1**
(43) Veröffentlichungstag der Anmeldung: **14.10.2015**
(21) Anmeldenummer: 14001925.8
(22) Anmeldetag: 03.06.2014
(51) Int. Cl.: F01K 27/00, F01K 3/00, F01K 23/06, F25J 1/02

(54) **Verfahren und Anlage zum Speichern und Rückgewinnen von Energie**

(30) Priorität: 11.04.2014 DE 102014005336
(71) Anmelder: Linde Aktiengesellschaft, 80331 München (DE); Mitsubishi Hitachi Power Systems Europe GmbH, 47059 Duisburg (DE)
(72) Erfinder: Alekseev, Alexander, 82515 Wolfratshausen (DE); Stiller, Christoph, 82256 Fürstenfeldbruck (DE); Stöver, Brian, 45665 Recklinghausen (DE); Bergins, Christian, 46711 Datteln (DE)
(74) Vertreter: Gellner, Bernd

(57) **Zusammenfassung**

Es wird ein Verfahren zum Speichern und Rückgewinnen von Energie vorgeschlagen, bei dem in einem Energiespeicherzeitraum ein Luftverflüssigungsprodukt (LAIR) gebildet und in einem Energierückgewinnungszeitraum unter Verwendung zumindest eines Teils des Luftverflüssigungsprodukts (LAIR) ein Druckstrom gebildet und arbeitsleistend entspannt wird, wobei das Verfahren umfasst, zur Bildung des Luftverflüssigungsprodukts (LAIR) Luft (AIR) in einer Luftkonditioniereinheit (10) zumindest mittels wenigstens einer isotherm betriebenen Verdichtereinrichtung (12, 16) zu verdichten und mittels wenigstens einer adsorptiven Reinigungseinrichtung (15) auf einem überatmosphärischen Druckniveau adsorptiv zu reinigen, die verdichtete und adsorptiv gereinigte Luft (HPAIR) von einem Temperaturniveau in einem Bereich von 0 bis 50 °C zu einem ersten Anteil in einer Festbettk ältespeichereinheit (20) und zu einem zweiten Anteil in einer Gegenstromwärmetauscheinheit (30) auf einem Verflüssigungsdruckniveau in einem Bereich von 40 bis 100 bara zu verflüssigen, und die verflüssigte Luft (HPLAIR) anschließend in wenigstens einer Kältegewinnungseinheit (40) zu entspannen, und zur Bildung des Druckstroms aus zumindest einem Teil des Verflüssigungsprodukts (LAIR) bei einem Entflüssigungsdruckniveau, das um nicht mehr als 5 bar von dem Verflüssigungsdruckniveau abweicht, in der Festbettkältespeichereinheit (20) ein Entflüssigungsprodukt (HPAIR) zu erzeugen, und aus zumindest einem Teil des Entflüssigungsprodukts (HPAIR) einen Fluidstrom zu bilden und durch wenigstens eine Verbrennungseinrichtung (63) zu führen, in der ein Brennstoff verbrannt wird. Eine entsprechende Anlage (100) ist ebenfalls Gegenstand der Erfindung.

## Beschreibung

Die vorliegende Erfindung betrifft ein Verfahren und eine Anlage zum Speichern und Rückgewinnen von Energie, insbesondere elektrischer Energie, gemäß den Oberbegriffen der jeweiligen unabhängigen Patentansprüche.

### Stand der Technik

Beispielsweise aus der DE 31 39 567 A1 und der EP 1 989 400 A1 ist bekannt, Flüssigluft oder Flüssigstickstoff, also tiefkalte Luftverflüssigungsprodukte, zur Netzregelung und zur Bereitstellung von Regelleistung in Stromnetzen zu verwenden.

Zu Billigstromzeiten oder Stromüberschusszeiten wird dabei Luft in einer Luftzerlegungsanlage mit einem integrierten Verflüssiger oder in einer dezidierten Verflüssigungsanlage, allgemein auch als Luftbehandlungseinheit bezeichnet, insgesamt oder teilweise zu einem derartigen Luftverflüssigungsprodukt verflüssigt. Das Luftverflüssigungsprodukt wird in einem Tanksystem mit Tieftemperaturtanks gespeichert. Dieser Betriebsmodus erfolgt in einem Zeitraum, der hier als Energiespeicherzeitraum bezeichnet wird.

Zu Spitzenlastzeiten wird das Luftverflüssigungsprodukt aus dem Tanksystem entnommen, mittels einer Pumpe druckerhöht und bis auf etwa Umgebungstemperatur oder höher angewärmt und damit in einen gasförmigen oder überkritischen Zustand überführt. Ein hierdurch erhaltener Druckstrom wird in einer Energiegewinnungseinheit in einer Entspannungsturbine oder mehreren Entspannungsturbinen mit Zwischenerwärmung bis auf Umgebungsdruck entspannt. Die dabei freiwerdende mechanische Leistung wird in einem oder mehreren Generatoren der Energiegewinnungseinheit in elektrische Energie umgewandelt und in ein elektrisches Netz eingespeist. Dieser Betriebsmodus erfolgt in einem Zeitraum, der hier als Energierückgewinnungszeitraum bezeichnet wird.

Die beim Überführen des Luftverflüssigungsprodukts in den gasförmigen oder überkritischen Zustand während des Energierückgewinnungszeitraums freiwerdende Kälte kann gespeichert und während des Energiespeicherzeitraums zur Bereitstellung von Kälte zur Gewinnung des Luftverflüssigungsprodukts eingesetzt werden.

Es sind auch Druckluftspeicherkraftwerke bekannt, in denen die Luft jedoch nicht verflüssigt, sondern in einem Verdichter verdichtet und in einer unterirdischen Kaverne gespeichert wird. In Zeiten hoher Stromnachfrage wird die Druckluft aus der Kaverne in die Brennkammer einer Gasturbine geleitet. Gleichzeitig wird der Gasturbine über eine Gasleitung Brennstoff, beispielsweise Erdgas, zugeführt und in der durch die Druckluft gebildeten Atmosphäre verbrannt. Das gebildete Abgas wird in der Gasturbine entspannt, wodurch Energie erzeugt wird.

Die vorliegende Erfindung ist von Verfahren und Vorrichtungen zu unterscheiden, bei denen ein sauerstoffreiches Fluid zur Unterstützung von Oxidationsreaktionen in eine Gasturbine eingeleitet wird. Entsprechende Verfahren und Vorrichtungen arbeiten grundsätzlich mit Luftverflüssigungsprodukten, welche (deutlich) mehr als 40 Molprozent Sauerstoff enthalten.

Die Wirtschaftlichkeit entsprechender Verfahren und Vorrichtungen wird stark vom Gesamtwirkungsgrad beeinflusst. Der Erfindung liegt daher die Aufgabe zugrunde, entsprechende Verfahren und Vorrichtungen in dieser Hinsicht zu verbessern.

### Offenbarung der Erfindung

Die vorliegende Erfindung schlägt vor diesem Hintergrund ein Verfahren und eine Anlage zum Speichern und Rückgewinnen von Energie, insbesondere elektrischer Energie, mit den Merkmalen der jeweiligen unabhängigen Patentansprüche vor. Bevorzugte Ausgestaltungen sind jeweils Gegenstand der abhängigen Patentansprüche und der nachfolgenden Beschreibung.

Vor der Erläuterung der im Rahmen der vorliegenden Erfindung erzielbaren Vorteile werden deren technische Grundlagen und einige in dieser Anmeldung verwendete Begriffe näher erläutert.

Unter einer "Energiegewinnungseinheit" wird hier eine Anlage oder ein Anlagenteil verstanden, die bzw. der zur Erzeugung von elektrischer Energie eingerichtet ist. Eine Energiegewinnungseinheit umfasst dabei zumindest eine Entspannungsturbine, die mit zumindest einem elektrischen Generator gekoppelt ist. Eine mit zumindest einem elektrischen Generator gekoppelte Entspannungsmaschine wird üblicherweise auch als "Generatorturbine" bezeichnet. Im Rahmen der vorliegenden Anmeldung wird unter einer Generatorturbine auch eine Entspannungsstufe einer Gasturbineneinheit verstanden. Die bei der Entspannung eines Fluids in der zumindest einen Entspannungsturbine bzw. Generatorturbine frei werdende mechanische Leistung kann in der Energiegewinnungseinheit in elektrische Energie umgesetzt werden.

Eine "Entspannungsturbine", die über eine gemeinsame Welle mit weiteren Entspannungsturbinen oder Energiewandlern wie Ölbremsen, Generatoren oder Verdichterstufen gekoppelt sein kann, ist zur Entspannung eines überkritischen, gasförmigen oder zumindest teilweise flüssigen Stroms eingerichtet. Insbesondere können Entspannungsturbinen zum Einsatz in der vorliegenden Erfindung als Turboexpander ausgebildet sein. Sind eine oder mehrere als Turboexpander ausgebildete Entspannungsturbinen nur mit einer oder mehreren Verdichterstufen, beispielsweise in Form von Radialverdichterstufen, gekoppelt und ggf. mechanisch gebremst, werden diese jedoch ohne extern, beispielsweise mittels eines Elektromotors, zugeführte Energie betrieben, wird hierfür allgemein auch der Begriff "Boosterturbine" verwendet. Eine derartige Boosterturbine verdichtet dabei zumindest einen Strom durch die Entspannung zumindest eines anderen Stroms, jedoch ohne extern, beispielsweise mittels eines Elektromotors, zugeführte Energie.

Unter einer "Gasturbineneinheit" wird im Rahmen der vorliegenden Anmeldung eine Anordnung aus wenigstens einer Brennkammer und wenigstens einer dieser nachgeschalteten Entspannungsturbine (der Gasturbine im engeren Sinn) verstanden. In letzterer werden heiße Gase aus der Brennkammer arbeitsleistend entspannt. Eine Gasturbineneinheit weist ferner wenigstens eine von der Entspannungsturbine über eine gemeinsame Welle angetriebene Verdichterstufe, typischerweise wenigstens eine Axialverdichterstufe, auf. Ein Teil der in der Entspannungsturbine erzeugten mechanischen Energie wird üblicherweise zum Antrieb der wenigstens einen Verdichterstufe eingesetzt. Ein weiterer Teil wird regelmäßig zur Erzeugung elektrischer Energie in einem Generator umgesetzt. Bei der Entspannungsturbine der Gasturbine handelt es sich damit um eine Generatorturbine im oben erläuterten Sinn.

Als Abwandlung einer Gasturbineneinheit weist eine "Verbrennungsturbineneinheit" lediglich die erwähnte Brennkammer und eine nachgeschaltete Entspannungsturbine auf. Ein Verdichter ist üblicherweise nicht vorgesehen. Eine "Heißgasturbineneinheit" weist im Gegensatz zu einer Gasturbineneinheit statt einer Brennkammer einen Erhitzer auf. Eine Heißgasturbineneinheit kann einstufig mit einem Erhitzer und einer Entspannungsturbine ausgebildet sein. Alternativ können auch mehrere Entspannungsturbinen, vorzugsweise mit Zwischenerhitzung, vorgesehen sein. In jedem Fall kann insbesondere stromab der "letzten" Entspannungsturbine ein weiterer Erhitzer vorgesehen sein. Auch die Heißgasturbine ist vorzugsweise mit einem oder mehreren Generatoren zur Erzeugung von elektrischer Energie gekoppelt.

Unter einer "Verdichtereinrichtung" wird hier eine Vorrichtung verstanden, die zum Verdichten wenigstens eines gasförmigen Stroms von wenigstens einem Eingangsdruck, bei dem dieser der Verdichtereinrichtung zugeführt wird, auf wenigstens einen Enddruck, bei dem dieser der Verdichtereinrichtung entnommen wird, eingerichtet ist. Die Verdichtereinrichtung bildet dabei eine bauliche Einheit, die jedoch mehrere einzelne "Verdichter" oder "Verdichterstufen" in Form bekannter Kolben-, Schrauben- und/oder Schaufelrad- bzw. Turbinenanordnungen (also Radial- oder Axialverdichterstufen) aufweisen kann. Insbesondere werden diese Verdichterstufen mittels eines gemeinsamen Antriebs, beispielsweise über eine gemeinsame Welle bzw. einen gemeinsamen Elektromotor, angetrieben. Mehrere Verdichter, z.B. Verdichter in einer erfindungsgemäß eingesetzten Luftkonditionierungseinheit, können zusammen eine oder mehrere Verdichtereinrichtungen bilden.

Eine "Luftkonditionierungseinheit" umfasst im hier verwendeten Sprachgebrauch zumindest eine Verdichtereinrichtung und zumindest eine adsorptive Reinigungseinrichtung. Adsorptive Reinigungseinrichtungen sind auf dem Gebiet der Luftzerlegung allgemein bekannt. In adsorptiven Reinigungseinrichtungen werden ein oder mehrere Luftströme durch einen oder mehrere Adsorberbehälter geführt, die mit einem geeigneten Adsorptionsmaterial, beispielsweise Molekularsieb, befüllt sind.

Die vorliegende Erfindung umfasst zumindest die Verflüssigung von Luft zu einem Luftverflüssigungsprodukt. Die hierzu verwendeten Vorrichtungen können dabei auch unter dem Begriff "Luftbehandlungseinheit" zusammengefasst werden. Hierunter wird im Sprachgebrauch der vorliegenden Anmeldung eine Anlage verstanden, die zur Gewinnung wenigstens eines Luftverflüssigungsprodukts aus Luft eingerichtet ist. Ausreichend für eine Luftbehandlungseinheit zum Einsatz in der vorliegenden Erfindung ist es, dass durch diese ein entsprechendes tiefkaltes Luftverflüssigungsprodukt erhalten werden kann, das als Speicherflüssigkeit verwendbar und in ein Tanksystem überführbar ist. Eine "Luftzerlegungsanlage" wird mit atmosphärischer Luft beschickt und weist ein Destillationssäulensystem zur Zerlegung der atmosphärischen Luft in ihre physikalischen Komponenten auf, insbesondere in Stickstoff und Sauerstoff. Hierzu wird die Luft zunächst in die Nähe ihres Taupunkts abgekühlt und dann in das Destillationssäulensystem eingeleitet. Im Gegensatz hierzu umfasst eine "Luftverflüssigungsanlage" kein Destillationssäulensystem. Im Übrigen entspricht ihr Aufbau dem einer Luftzerlegungsanlage mit der Abgabe eines Luftverflüssigungsprodukts. Selbstverständlich kann auch in einer Luftzerlegungsanlage Flüssigluft als Nebenprodukt erzeugt werden.

Ein "Luftverflüssigungsprodukt" ist jedes Produkt, das zumindest durch Verdichten, Abkühlen und anschließendes Entspannen von Luft in Form einer tiefkalten Flüssigkeit hergestellt werden kann. Insbesondere kann es sich bei einem Luftverflüssigungsprodukt um Flüssigluft, flüssigen Sauerstoff, flüssigen Stickstoff und/oder ein flüssiges Edelgas wie flüssiges Argon handeln. Die Begriffe "flüssiger Sauerstoff' bzw. "flüssiger Stickstoff' bezeichnen dabei jeweils auch eine tiefkalte Flüssigkeit, die Sauerstoff bzw. Stickstoff in einer Menge aufweist, die oberhalb derer atmosphärischer Luft liegt. Es muss sich dabei also nicht notwendigerweise um reine Flüssigkeiten mit hohen Gehalten von Sauerstoff bzw. Stickstoff handeln. Unter flüssigem Stickstoff wird also sowohl reiner oder im Wesentlichen reiner Stickstoff verstanden, als auch ein Gemisch aus verflüssigten Luftgasen, dessen Stickstoffgehalt höher als derjenige der atmosphärischen Luft ist. Beispielsweise weist dieses einen Stickstoffgehalt von mindestens 90, vorzugsweise mindestens 99 Molprozent auf.

Ist hier von einem "Entflüssigungsprodukt" die Rede, sei darunter ein durch Überführen einer Flüssigkeit in gasförmigen oder überkritischen Zustand gebildetes Fluid verstanden. Wird eine Flüssigkeit bei überkritischem Druck "verdampft", geht sie nicht in die Gasphase sondern in den überkritischen Zustand über, wobei kein Phasenübergang im eigentlichen Sinn erfolgt. Dies wird auch als "Pseudoverdampfen" bezeichnet. Bei unterkritischem Druck erfolgt ein Phasenübergang vom flüssigen in den gasförmigen Zustand, also ein herkömmliches "Verdampfen". Eine Entflüssigung umfasst damit im Rahmen der vorliegenden Anmeldung sowohl eine Verdampfung als auch eine Pseudoverdampfung. Bei einer "Verflüssigung" gehen sowohl gasförmige als auch überkritische Fluide in den flüssigen Zustand über.

Unter einer "tiefkalten" Flüssigkeit, bzw. einem entsprechenden Fluid, Luftverflüssigungsprodukt, Strom usw. wird ein flüssiges Medium verstanden, dessen Siedepunkt deutlich unterhalb der jeweiligen Umgebungstemperatur liegt und beispielsweise 200 K oder weniger, insbesondere 220 K oder weniger, beträgt. Beispiele sind flüssige Luft, flüssiger Sauerstoff, flüssiger Stickstoff usw.

Unter einer "Festbettkältespeichereinheit" wird im Rahmen dieser Anmeldung eine Vorrichtung verstanden, die ein festes, zur Kältespeicherung geeignetes Material enthält und Fluidführungsmittel durch dieses Material aufweist. Bekannte Festbettkältespeichereinheiten, die in herkömmlichen Luftzerlegungsanlagen auch als Regeneratoren bezeichnet werden und dort auch zur Abtrennung unerwünschter Komponenten wie Wasser und/oder Kohlendioxid verwendet werden, umfassen beispielsweise mit Kanälen durchzogene Betonblöcke (bei Luftzerlegungsanlagen ungewöhnlich), (Stein-)Schüttungen und/oder geriffelte Aluminiumbleche und werden von den jeweils abzukühlenden bzw. zu erwärmenden Strömen in einander entgegengesetzter Richtung und in unterschiedlichen Zeiträumen durchströmt. Im Rahmen dieser Anmeldung werden die Begriffe "Wärmespeicher" und "Kältespeicher" synonym verwendet. Eine Kältespeichereinheit umfasst einen oder mehrere Kältespeicher. Die in einem oder mehreren Kältespeichern verwendbaren Wärmespeichermedien richten sich nach der Konfiguration des Verfahrens.

Festbettkältespeicher sind in der einschlägigen Fachliteratur beschrieben (siehe beispielsweise i. Dinçer und M.A. Rosen, "Thermal Energy Storage - Systems and Applications", Chichester, John Wiley & Sons 2002). Als Speichermedien eignen sich beispielsweise Gestein, Beton, Ziegel, künstlich hergestellte Keramiken oder Gusseisen. Für niedrigere Speichertemperaturen eignen sich ferner Erde, Kies, Sand oder Schotter. Weitere Speichermedien wie Thermalöle oder Salzschmelzen sind beispielsweise aus dem Gebiet der Solartechnik bekannt. In entsprechenden Kältespeichern kann es sich als besonders vorteilhaft erweisen, das Speichermedium in einem Isolierbehälter bereitzustellen, was eine verlustfreie oder nahezu verlustfreie Kältespeicherung ermöglicht.

Eine "Gegenstromwärmetauscheinheit" ist unter Verwendung eines oder mehrerer Gegenstromwärmetauscher, beispielsweise eines oder mehrerer Plattenwärmetauscher, ausgebildet. Im Gegensatz zu einer Festbettkältespeichereinheit erfolgt die Abkühlung in einer Gegenstromwärmetauscheinheit nicht durch Abgabe an bzw. Aufnahme von Wärme aus einem Festbett, sondern indirekt an einen bzw. aus einem im Gegenstrom geführten Wärme- bzw. Kälteträger. Als Wärmetauscher in einer Gegenstromwärmetauscheinheit zum Einsatz in der vorliegenden Erfindung eignen sich sämtliche bekannten Wärmetauscher, beispielsweise Plattenwärmetauscher, Rohrbündelwärmetauscher und dergleichen. Eine Gegenstromwärmetauscheinheit dient zur indirekten Übertragung von Wärme zwischen zumindest zwei im Gegenstrom zueinander geführten Strömen, beispielsweise einem warmen Druckluftstrom und einem oder mehreren kalten Strömen oder einem tiefkalten Luftverflüssigungsprodukt und einem oder mehreren warmen Strömen. Ein Gegenstromwärmetauscheinheit kann aus einem einzelnen oder mehreren parallel und/oder seriell verbundenen Wärmetauscherabschnitten gebildet sein, z.B. aus einem oder mehreren Plattenwärmetauscherblöcken. Ist hier nachfolgend von einem "Wärmetauscher" die Rede, kann hierunter sowohl ein Gegenstromwärmetauscher als auch ein anderer Wärmetauscher verstanden werden.

Unter einem "Erhitzer" wird im Rahmen dieser Anmeldung ein System zum indirekten Wärmetausch zwischen einem Heizfluid und einem zu erhitzenden gasförmigen Fluid verstanden. Mittels eines derartigen Erhitzers kann Restwärme, Abwärme, Prozesswärme, Solarwärme etc. auf das zu erhitzende gasförmige Fluid übertragen und zur Energieerzeugung in einer Heißgasturbine genutzt werden.

Verfahren und Vorrichtungen zur Tieftemperaturzerlegung von Luft und die dort und auch im Rahmen der vorliegenden Erfindung einsetzbaren Verfahren und Vorrichtungen sind auch beispielsweise in Häring, H.-W. (Hrsg.), "Industrial Gases Processing", Weinheim, Wiley-VCH 2008 (insbesondere Kapitel 2.2.5, "Cryogenic Rectification") und Kerry, F. G., "Industrial Gas Handbook - Gas Separation and Purification", Boca Raton, CRC Press 2006 (insbesondere Kapitel 3, "Air Separation Technology") beschrieben.

Die vorliegende Anmeldung verwendet zur Charakterisierung von Drücken und Temperaturen die Begriffe "Druckniveau" und "Temperaturniveau", wodurch zum Ausdruck gebracht werden soll, dass Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche Druckverluste oder zu erwartende Druckverluste, beispielsweise aufgrund von Abkühlungseffekten oder Leitungsverlusten, ein. Entsprechendes gilt für Temperaturniveaus. Bei den hier in bara angegebenen Druckniveaus handelt es sich um Absolutdrücke in bar.

### Vorteile der Erfindung

Die vorliegende Erfindung schlägt ein Verfahren zum Speichern und Rückgewinnen von Energie vor, bei dem in einem Energiespeicherzeitraum ein Luftverflüssigungsprodukt gebildet und in einem Energierückgewinnungszeitraum unter Verwendung zumindest eines Teils des Luftverflüssigungsprodukts ein Druckstrom gebildet und arbeitsleistend entspannt wird.

Wie bereits erwähnt, wird im Rahmen dieser Anmeldung unter einem Luftverflüssigungsprodukt ein beliebiges, durch Verdichten und kryogenes Abkühlen von Luft herstellbares Produkt in flüssigem Zustand verstanden. Die vorliegende Erfindung wird nachfolgend insbesondere unter Bezugnahme auf Flüssigluft als Luftverflüssigungsprodukt beschrieben, sie eignet sich jedoch auch für andere Luftverflüssigungsprodukte, insbesondere sauerstoffhaltige Luftverflüssigungsprodukte. Im Gegensatz zu den eingangs erwähnten Verfahren und Vorrichtungen bei denen ein sauerstoffreiches Fluid zur Unterstützung von Oxidationsreaktionen in eine Gasturbine eingeleitet wird, wird vorliegend jedoch vorteilhafterweise ein sauerstoffhaltiges Luftverflüssigungsprodukt mit (deutlich) unter 40, 35 oder 30 Molprozent Sauerstoff verwendet, beispielsweise mit dem Sauerstoffgehalt natürlicher Luft. Eine destillative Trennung eines Luftverflüssigungsprodukts ist damit nicht erforderlich.

Die Begriffe "Energiespeicherzeitraum" und "Energierückgewinnungszeitraum" wurden bereits eingangs erwähnt. Hierunter werden insbesondere Zeiträume verstanden, die einander nicht überlappen. Dies bedeutet, dass die nachfolgend für den Energiespeicherzeitraum beschriebenen Maßnahmen typischerweise nicht während des Energierückgewinnungszeitraums durchgeführt werden und umgekehrt. Es kann jedoch auch vorgesehen sein, beispielsweise in einem weiteren Zeitraum zumindest einen Teil der für den Energiespeicherzeitraum beschriebenen Maßnahmen zeitgleich mit den für den Energierückgewinnungszeitraum beschriebenen Maßnahmen durchzuführen, beispielsweise um eine größere Kontinuität im Betrieb einer entsprechenden Anlage sicherzustellen. Beispielsweise kann auch in einem Energiespeicherzeitraum einer Energiegewinnungseinheit ein Druckstrom zugeführt und in dieser arbeitsleistend entspannt werden, beispielsweise um die hier verwendeten Entspannungseinrichtungen ohne Stillstand betreiben zu können. Der Energiespeicherzeitraum und der Energierückgewinnungszeitraum entsprechen jeweils einem Betriebs- bzw. Verfahrensmodus einer entsprechenden Anlage bzw. eines entsprechenden Verfahrens.

Die vorliegende Erfindung umfasst, zur Bildung des Luftverflüssigungsprodukts Luft in einer Luftkonditioniereinheit zumindest mittels wenigstens einer isotherm betriebenen Verdichtereinrichtung zu verdichten und mittels wenigstens einer adsorptiven Reinigungseinrichtung auf einem überatmosphärischen Druckniveau adsorptiv zu reinigen. Die verdichtete und adsorptiv gereinigte Luft wird anschließend, ausgehend von einem Temperaturniveau in einem Bereich von 0 bis 50 °C, bei dem sie die Luftkonditioniereinheit bzw. eine dort vorgesehene isotherm betriebene Verdichtereinrichtung verlässt, zu einem ersten Anteil in einer Festbettkältespeichereinheit und zu einem zweiten Anteil in einer Gegenstromwärmetauscheinheit auf einem Verflüssigungsdruckniveau in einem Bereich von 40 bis 100 bara verflüssigt. Die verflüssigte Luft wird zur Bildung des Luftverflüssigungsprodukts anschließend in wenigstens einer Kältegewinnungseinheit entspannt, wobei insbesondere der erste und der zweite Anteil zuvor wieder miteinander vereinigt werden können.

Im Rahmen der vorliegenden Erfindung wird zur Bildung des Druckstroms aus zumindest einem Teil des Verflüssigungsprodukts bei einem Entflüssigungsdruckniveau, das um nicht mehr als 5 bar, insbesondere um nicht mehr als 4 bar, 3 bar, 2 bar oder 1 bar, von dem Verflüssigungsdruckniveau abweicht, in der Festbettkältespeichereinheit ein Entflüssigungsprodukt erzeugt. Das Verflüssigungsdruckniveau und das Entflüssigungsdruckniveau können einander auch entsprechen. Aus zumindest einem Teil des Entflüssigungsprodukts wird zur Bildung des Druckstroms dann ein Fluidstrom gebildet und durch wenigstens eine Verbrennungseinrichtung geführt, in der ein Brennstoff verbrannt wird.

Ein wesentlicher Aspekt der vorliegenden Erfindung ist bei der Bildung des Druckstroms das Führen eines entsprechenden Fluidstroms durch wenigstens eine Verbrennungseinrichtung, beispielsweise wenigstens eine Brennkammer. In der Verbrennungseinrichtung wird ein Brennstoff in der durch den Fluidstrom gebildeten Atmosphäre verbrannt. Der dabei gebildete Druckstrom setzt sich damit aus den bei der Verbrennung des Brennstoffs nicht umgesetzten Komponenten des Fluidstroms (beispielsweise Stickstoff) und entsprechenden Verbrennungsprodukten (beispielsweise Kohlendioxid) zusammen. Wie erwähnt, ist die vorliegende Erfindung insbesondere zur Verwendung mit Luftverflüssigungsprodukten geeignet, die Sauerstoff enthalten. Für die Verbrennung in der Verbrennungseinrichtung muss daher kein zusätzlicher, beispielsweise extern bereitgestellter, Sauerstoff zugeführt werden. Als Brennstoff eignen sich beispielsweise flüssige oder gasförmige Kohlenwasserstoffe und Kohlenwasserstoffgemische, beispielsweise Erdgas und/oder Methan.

Durch die Zufuhr eines Brennstoffs und dessen Verbrennung kann ein Druckstrom gebildet werden, der auf einem sehr viel höheren Druckniveau bereitsteht als dies in herkömmlichen Verfahren der Fall ist. Das erfindungsgemäße Verfahren erlaubt damit nicht nur die Rückgewinnung der (bis auf Wirkungsgradverluste) beim Bilden des Luftverflüssigungsprodukts gespeicherten Energie sondern die Erzeugung weiterer Energie durch Verbrennen des Brennstoffs. Ein derartiges Verfahren erweist sich als deutlich kosteneffizienter als Verfahren des Standes der Technik, wie sie beispielsweise in der EP 2 397 669 A2 und der US 2012/0216520 A1 beschrieben sind, da aus der gleichen Luftmenge eine erheblich größere (nahezu die doppelte) elektrische Leistung erzeugt werden kann.

Im Rahmen der vorliegenden Erfindung ist, wie erwähnt, vorgesehen, den Festbettkältespeicher in dem Energiespeichermodus und dem Energierückgewinnungsmodus auf gleichen oder ähnlichen Druckniveaus (dem Verflüssigungsdruckniveau und dem Entflüssigungsdruckniveau) in Bereich von 40 bis 100 bara zu betreiben. Hierdurch werden Druckschwankungen innerhalb des Festbettspeichers vermieden und dessen mechanische Stabilität erhöht, bzw. Anforderungen an dessen mechanische Festigkeit wesentlich reduziert. Dabei wird zur Bildung des Luftverflüssigungsprodukts die Luft in der zumindest einen Luftkonditionierungseinheit auf ein entsprechendes Druckniveau verdichtet, das bei unter- oder überkritischem Druck liegen kann. In der Festbettkältespeichereinheit und der Gegenstromwärmetauscheinheit kann damit ein entsprechender Hochdruckluftstrom aus dem überkritischen Zustand (ohne klassischen Phasenübergang) oder dem unterkritischen Zustand in den flüssigen Zustand überführt werden. Beide Übergänge werden hier unter dem Begriff "Verflüssigen" zusammengefasst. Entsprechendes gilt auch zur bereits erläuterten Bildung des Entflüssigungsprodukts durch "Entflüssigen".

Im Rahmen der vorliegenden Erfindung ist, wie erwähnt, ferner vorgesehen, den ersten Anteil und den zweiten Anteil der verdichteten und adsorptiv gereinigten Luft der Festbettkältespeichereinheit und der Gegenstromwärmetauschereinheit auf einem Temperaturniveau von 0 bis 50 °C zuzuführen. Die Ei nspeisung erfolgt damit vorteilhafterweise bei Umgebungstemperatur, was einen besonders vorteilhaften Betrieb der Festbettkältespeichereinheit ermöglicht.

Dies ist insbesondere möglich, weil im Rahmen des erfindungsgemäßen Verfahrens, wie erwähnt, eine Luftkonditionierungseinheit mit wenigstens einer isotherm betriebenen Verdichtereinrichtung verwendet wird. Eine isotherm betriebene Verdichtereinrichtung, die eine oder mehrere Verdichterstufen bzw. Verdichter im oben erläuterten Sinne aufweisen kann, zeichnet sich dadurch aus, dass ein dieser zugeführter und ein dieser entnommener, verdichteter Strom im Wesentlichen ein gleiches Temperaturniveau aufweisen, im Gegensatz zu adiabat betriebenen Verdichtern, bei denen das Verdichtungsprodukt eine deutlich höhere Temperatur als der in die Verdichtereinheit eingespeiste Strom aufweist. Eine isotherm betriebene Verdichtereinheit weist beispielsweise Zwischen- und Nachkühler auf.

Im Rahmen des erfindungsgemäßen Verfahrens wird ferner, wie ebenfalls erwähnt, eine Luftkonditionierungseinheit mit wenigstens einer auf einem überatmosphärischen Druckniveau betriebenen adsorptiven Reinigungseinrichtung verwendet. Die im Rahmen der vorliegenden Erfindung verwendete Luftkonditionierungseinheit verdichtet, wie erwähnt, die zugeführte Luft über mehrere Druckstufen. Die adsorptive Reinigungseinrichtung kann auf jeder dieser Druckstufen eingesetzt bzw. bereitgestellt werden. Beispielsweise kann eine Reinigungseinrichtung auf einem Enddruckniveau, das durch die Luftkonditionierungseinheit bereitgestellt wird, besonders klein bauend ausgeführt werden, weil aufgrund der Verdichtung geringe Luftmassen gereinigt werden müssen. Eine adsorptive Reinigungseinrichtung kann im Rahmen der vorliegenden Erfindung einen oder mehrere adsorptive Reinigungsbehälter umfassen, wie im Rahmen der Figurenbeschreibung näher erläutert.

Weil im Rahmen der vorliegenden Erfindung die in dem Energiespeicherzeitraum in der Festbettkältespeichereinheit und der Gegenstromwärmetauscheinheit verflüssigte Luft in einer Kältegewinnungseinheit entspannt wird, wird die Bereitstellung zusätzlicher Kälte ermöglicht, die beispielsweise Kälteverluste in einer entsprechenden Anlage, beispielsweise in einem Speichertank zur Aufnahme des Luftverflüssigungsprodukts, ausgleicht. Ein bei der Entspannung gebildetes Verdampfungsprodukt kann zudem als Regeneriergas genutzt werden, wie unten erläutert.

In dem erfindungsgemäßen Verfahren wird zur Rückgewinnung der Energie vorteilhafterweise der durch die wenigstens eine Verbrennungseinrichtung geführte Fluidstrom als der erwähnte Druckstrom in wenigstens einer Generatorturbine entspannt. Unter einer Generatorturbine wird hier, wie erwähnt, jede mit einem Generator gekoppelte Entspannungsmaschine verstanden. Die Verwendung einer Generatorturbine erlaubt eine flexible Rückgewinnung von Energie in Form von elektrischem Strom. Grundsätzlich kann die Erfindung zur Rückgewinnung der Energie jedoch auch die Verwendung anderer Maßnahmen umfassen, beispielsweise den Betrieb eines mittels einer Entspannungsmaschine bzw. einer hiermit verbundenen Pumpe befüllten hydraulischen Speichers.

Mit besonderem Vorteil wird als die wenigstens eine Generatorturbine wenigstens eine Entspannungsturbine wenigstens einer Gasturbineneinheit verwendet. Eine Gasturbineneinheit umfasst, wie erläutert, eine Verdichtungsstufe und eine Expansionsstufe, die über eine gemeinsame Welle miteinander und mit einem Generator verbunden sind. Die Expansionsstufe einer Gasturbineneinheit bildet damit eine Generatorturbine in dem zuvor erläuterten Sinn. Eine Gasturbineneinheit ermöglicht eine besonders effektive Rückgewinnung von elektrischer Energie, weil hier eine besonders vorteilhafte Druckerhöhung in einer Brennkammer nach einer zuvor bereits über die Verdichtungsstufe erfolgten Verdichtung möglich ist. Alternativ oder zusätzlich können auch eine oder mehrere Verbrennungs- und/oder Heißgasturbineneinheiten eingesetzt werden.

Das erfindungsgemäße Verfahren umfasst vorteilhafterweise, den Fluidstrom vor dem Führen durch die Brennkammer zumindest ein (weiteres) Mal zu erwärmen, zu entspannen und/oder zu verdichten. Beispielsweise kann der aus zumindest einem Teil des Entflüssigungsprodukts gebildete Fluidstrom zunächst durch einen Wärmetauscher geführt, hierin erwärmt, anschließend in einer Generatorturbine entspannt und erst dann in die Brennkammer oder in eine Verdichtungsstufe einer Generatorturbine eingespeist werden. Auf diese Weise lässt sich der jeweilige (ggf. latente) Energiegehalt eines entsprechenden Stroms besonders effektiv nutzen.

Vorteilhafterweise wird der wenigstens einen adsorptiven Reinigungseinrichtung in einer Regenerationsphase ein Regeneriergas zugeführt, das aus einem Teil der zuvor in der Luftkonditionierungseinheit verdichteten und adsorptiv gereinigten Luft gebildet wird. Ein entsprechendes Regeneriergas wird vorteilhafterweise vor seiner Verwendung erwärmt, wie auch nachfolgend noch erläutert. Eine Regenerationsphase einer adsorptiven Reinigungseinrichtung kann, wenn nur ein Reinigungsbehälter vorhanden ist, dann durchgeführt werden, wenn keine Reinigungsleistung durch die Reinigungseinrichtung erbracht werden muss, beispielsweise in einem Energierückgewinnungszeitraum. Sind mehrere im Wechsel betreibbare Reinigungsbehälter vorhanden, können diese unabhängig von dem jeweils vorliegenden Zeitraum regeneriert werden.

Das Regeneriergas kann entweder während des Energiespeicherzeitraums aus zumindest einem Teil eines bei der Entspannung der verflüssigten Luft gebildeten Verdampfungsprodukts oder während des Energierückgewinnungszeitraums aus zumindest einem Teil des Entflüssigungsprodukts gebildet werden.

Vorteilhafterweise wird ein bei der Entspannung der verflüssigten Luft gebildetes Verdampfungsprodukt durch die Gegenstromwärmetauscheinheit geführt und dabei erwärmt. Das Verdampfungsprodukt dient dabei zur Kühlung des durch die Gegenstromwärmetauscheinheit geführten zweiten Anteils der in der Luftkonditionierungseinheit verdichteten und adsorptiv gereinigten Luft. Entsprechende Kälte kann damit vorteilhafterweise genutzt werden. Entsprechendes Fluid kann auch als Regeneriergas genutzt werden.

Vorteilhafterweise wird im Rahmen des erfindungsgemäßen Verfahrens wenigstens ein Kälteträger durch die Gegenstromwärmetauscheinheit geführt, der mittels eines externen Kältekreislaufs bereitgestellt und/oder durch Entspannen aus einem Teil der zuvor in der Luftkonditionierungseinheit verdichteten und adsorptiv gereinigten Luft gebildet wird. In letzterem Fall kann beispielsweise mittels der Luftkonditionierungseinheit eine größere Luftmenge verdichtet und adsorptiv gereinigt werden, als sie zur Bildung des Luftverflüssigungsprodukts und dessen Speicherung benötigt wird. Die entsprechende "überschüssige" Luft kann gegebenenfalls in der Gegenstromwärmetauscheinheit auf eine Zwischentemperatur abgekühlt und anschließend kälteleistend entspannt und vom kalten Ende zum warmen Ende durch die Gegenstromwärmetauscheinheit geführt werden. Auf diese Weise kann der erforderliche Kältebedarf ohne zusätzliche Einrichtungen gedeckt werden. Die Verwendung eines externen Kältekreislaufs ermöglicht hingegen eine völlig unabhängige Bereitstellung von Kälte.

Eine Anlage, die zum Speichern und Rückgewinnen von Energie durch Bilden eines Luftverflüssigungsprodukts in einem Energiespeicherzeitraum und Erzeugen und arbeitsleistendes Entspannen eines unter Verwendung eines Teils des Luftverflüssigungsprodukts gebildeten Druckstroms in einem Energierückgewinnungszeitraum eingerichtet ist, ist ebenfalls Gegenstand der vorliegenden Erfindung.

Die Anlage weist Mittel auf, die dafür eingerichtet sind, zur Bildung des Luftverflüssigungsprodukts Luft in einer Luftkonditioniereinheit zumindest mittels wenigstens einer isotherm betriebenen Verdichtereinrichtung zu verdichten und mittels wenigstens einer adsorptiven Reinigungseinrichtung auf überatmosphärischem Druckniveau adsorptiv zu reinigen, die verdichtete und adsorptiv gereinigte Luft ausgehend von einem Temperaturniveau in einem Bereich von 0 bis 50 °C zu einem ersten Anteil in einer Festbettkältespeichereinheit und zu einem zweiten Anteil in einer Gegenstromwärmetauscheinheit auf einem Verflüssigungsdruckniveau in einem Bereich von 40 bis 100 bara zu verflüssigen, und die verflüssigte Luft anschließend in wenigstens einer Kältegewinnungseinheit zu entspannen.

Die Mittel sind ferner dafür eingerichtet, zur Bildung des Druckstroms aus zumindest einem Teil des Verflüssigungsprodukts bei einem Entflüssigungsdruckniveau, das um nicht mehr als 5 bar, insbesondere nicht mehr als 4 bar, 3 bar, 2 bar oder 1 bar, von dem Verflüssigungsdruckniveau abweicht, in der Festbettkältespeichereinheit ein Entflüssigungsprodukt zu erzeugen und aus zumindest einem Teil des Entflüssigungsprodukts einen Fluidstrom zu bilden und durch wenigstens eine Verbrennungseinrichtung zu führen, in der ein Brennstoff verbrannt wird.

Eine derartige Anlage weist vorteilhafterweise sämtliche Mittel auf, die sie zur Durchführung des zuvor ausführlich erläuterten Verfahrens befähigen. Eine derartige Anlage profitiert daher von den Vorteilen eines entsprechenden Verfahrens, auf die daher ausdrücklich verwiesen wird.

Die Erfindung wird unter Bezugnahme auf die beigefügten Zeichnungen näher erläutert, welche bevorzugte Ausführungsformen der Erfindung zeigen.

### Kurze Beschreibung der Zeichnungen

Figuren 1A und 1B zeigen eine Anlage gemäß einer Ausführungsform der Erfindung in einem Energiespeicherzeitraum und einem Energierückgewinnungszeitraum.
Figuren 2A bis 2F zeigen eine Luftkonditionierungseinheit und eine Energiegewinnungseinheit gemäß Ausführungsformen der Erfindung.
Figuren 3A und 3B zeigen Kühleinrichtungen für Luftkonditionierungseinheiten gemäß Ausführungsformen der Erfindung.
Figur 4 zeigt eine Luftreinigungseinrichtung für eine Luftkonditionierungseinheit gemäß einer Ausführungsform der Erfindung.
Figur 5 zeigt eine Verdichtereinrichtung mit einer Regeneriergasvorheizeinrichtung für eine Luftkonditionierungseinheit gemäß einer Ausführungsform der Erfindung.
Figuren 6A und 6B zeigen eine Luftreinigungseinrichtung in dem Energiespeicherzeitraum und dem Energierückgewinnungszeitraum für eine Luftkonditionierungseinheit gemäß spezifischer Ausführungsformen der Erfindung.
Figur 7 zeigt eine Regeneriergasvorheizeinrichtung für eine Luftkonditionierungseinheit gemäß einer spezifischen Ausführungsform der Erfindung.
Figuren 8A bis 8C zeigen Anlagen gemäß Ausführungsformen der Erfindung und veranschaulichen Details einer zugehörigen Gegenstromwärmetauscheinheit.

### Ausführungsformen der Erfindung

In den Figuren sind einander grundsätzlich entsprechende Elemente, Apparate, Vorrichtungen und Fluidströme mit identischen Bezugszeichen veranschaulicht und werden der Übersichtlichkeit halber nicht in sämtlichen Fällen erneut erläutert.

In den Figuren ist eine Vielzahl von Ventilen dargestellt, die teilweise durchlässig und teilweise sperrend geschaltet sind. Sperrend geschaltete Ventile sind in den Figuren durchkreuzt dargestellt. Durch sperrend geschaltete Ventile unterbrochene Fluidströme und entsprechend deaktivierte Einrichtungen sind überwiegend gestrichelt veranschaulicht. Gasförmige bzw. in überkritischem Zustand vorliegende Ströme sind mit weißen (nicht ausgefüllten) Pfeildreiecken, flüssige Ströme mit schwarzen (ausgefüllten) Pfeildreiecken veranschaulicht.

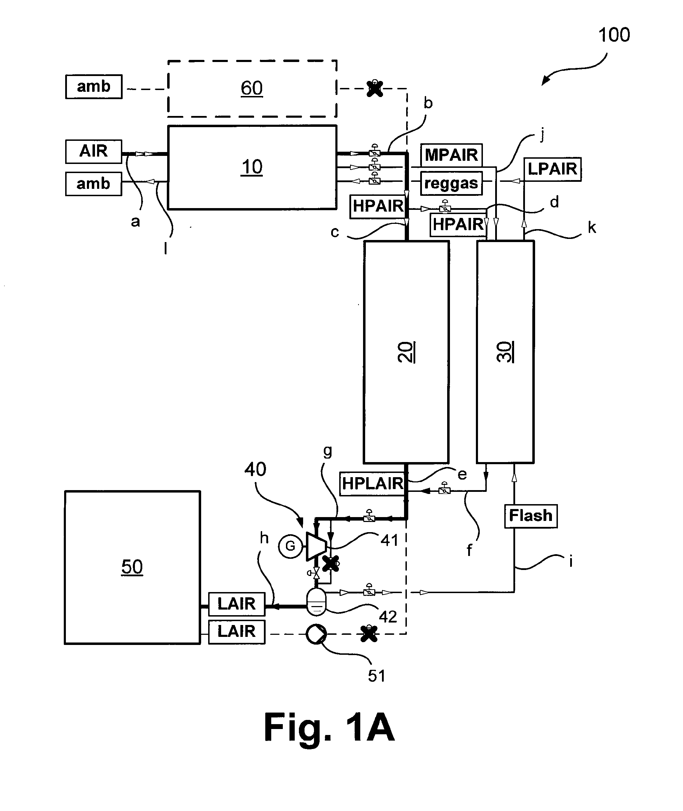

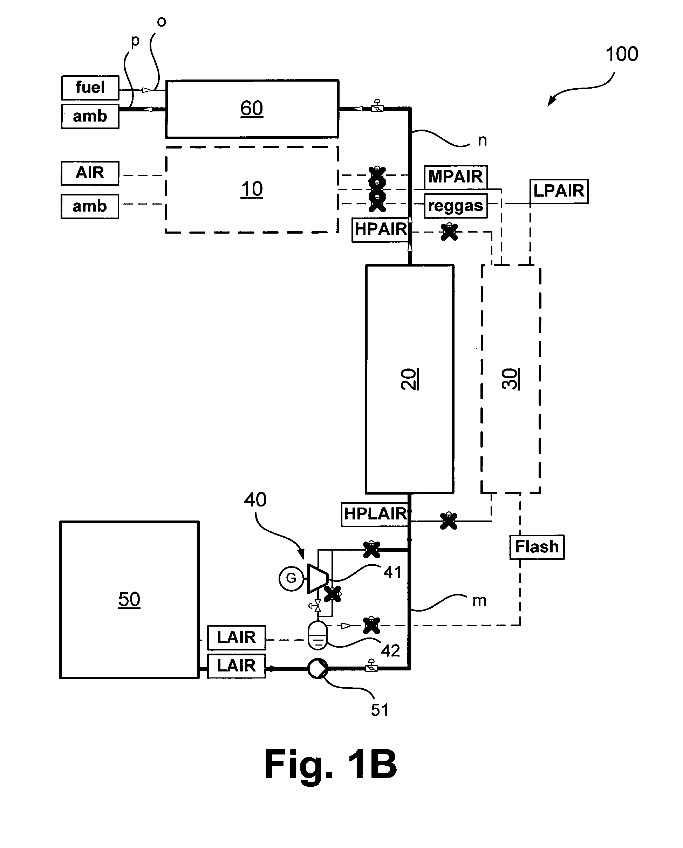

In den Figuren 1A und 1B ist eine Anlage gemäß einer besonders bevorzugten Ausführungsform der Erfindung in einem Energiespeicherzeitraum (Figur 1A) und einem Energierückgewinnungszeitraum (Figur 1 B) dargestellt und insgesamt mit 100 bezeichnet.

Die Anlage 100 umfasst als zentrale Komponenten eine Luftkonditionierungseinheit 10, eine Festbettkältespeichereinheit 20, eine Gegenstromwärmetauscheinheit 30, eine Kältegewinnungseinheit 40, eine Flüssigspeichereinheit 50 und eine Energiegewinnungseinheit 60.

Hier und im Folgenden können einige oder alle der gezeigten Komponenten in beliebiger Anzahl vorhanden sein und beispielsweise parallel mit entsprechenden Teilströmen beschickt werden.

In dem in Figur 1A veranschaulichten Energiespeicherzeitraum wird der Anlage 100 ein Luftstrom a (AIR, Einsatzluft) zugeführt und in der Luftkonditionierungseinheit 10 verdichtet und aufgereinigt. Ein entsprechend verdichteter und aufgereinigter, insbesondere von Wasser und Kohlendioxid befreiter Strom b liegt auf einem Druckniveau von beispielsweise 40 bis 100 bara vor und wird nachfolgend auch als Hochdruckluftstrom b bezeichnet.

Der Hochdruckluftstrom b wird in dem in Figur 1A veranschaulichten Energiespeicherzeitraum der Anlage 100 in einen ersten Teilstrom c und einen zweiten Teilstrom d aufgeteilt. Es versteht sich, dass in entsprechenden Anlagen auch die Aufteilung eines entsprechenden Hochdruckluftstroms b in mehr als zwei Teilströme vorgesehen sein kann.

Die Luft der Teilströme c und d (HPAIR) wird der Festbettkältespeichereinheit 20 einerseits und der Gegenstromwärmetauscheinheit 30 andererseits auf dem bereits erwähnten Druckniveau des Hochdruckluftstroms b zugeführt und jeweils in der Festbettkältespeichereinheit 20 bzw. der Gegenstromwärmetauscheinheit 30 verflüssigt. Die Luft der entsprechend verflüssigten Ströme e und f (HPLAIR) wird zu einem Sammelstrom g vereinigt. Das Druckniveau der Ströme e, f und g entspricht im Wesentlichen, d.h. bis auf Leitungs- und Abkühlungsverluste, dem Druckniveau des Hochdruckluftstroms b.

Die verflüssigte Luft des Stroms g, also ein Luftverflüssigungsprodukt, wird in der Kältegewinnungseinheit 40, die beispielsweise eine Generatorturbine 41 umfassen kann, entspannt. Die entspannte Luft kann beispielsweise in einen Abscheiderbehälter 42 überführt werden, in dessen unterem Teil sich eine Flüssigphase abscheidet und in dessen oberem Teil eine Gasphase vorliegt.

Die Flüssigphase aus dem Abscheiderbehälter 42 kann als Strom h (LAIR) abgezogen und in die Flüssigspeichereinheit 50, die beispielsweise einen oder mehrere isolierte Speichertanks umfassen kann, überführt werden. Das Druckniveau des Stroms h liegt beispielsweise bei 1 bis 16 bara. Die aus dem oberen Teil des Abscheiderbehälters 42 als Strom i abgezogene Gasphase (Flash) kann im Gegenstrom zu dem Strom f durch die Gegenstromwärmetauscheinheit 30 geführt und anschließend in Form des Stroms k (LPAIR, reggas) in der Luftkonditionierungseinheit 10 als Regeneriergas genutzt werden. Das Druckniveau des Stroms k liegt beispielsweise bei Atmosphärendruck bis ca. 2 bara. Stromab liegt ein entsprechender Strom I typischerweise bei Atmosphärendruck (amb) vor und kann in die Umgebung abgegeben werden.

Während des in der Figur 1A veranschaulichten Energiespeicherzeitraums wird die in der Festbettkältespeichereinheit 20 gespeicherte Kälte zur Verflüssigung der Luft des Teilstroms c verwendet. Zusätzlich ist die Gegenstromwärmetauscheinheit 30 bereitgestellt, in der zusätzliche Luft, nämlich Luft des Teilstroms d, im Gegenstrom zu beispielsweise einem kalten Strom i, der aus entspannter, verdampfter Luft des Stroms g gewonnen werden kann, verflüssigt werden kann. Die Verwendung der Gegenstromwärmetauscheinheit 30 ermöglicht einen flexibleren Betrieb der Anlage 100 als dies bei Verwendung nur der Festbettkältespeichereinheit 20 der Fall wäre.

Durch die Gegenstromwärmetauscheinheit 30 wird ferner ein Strom j geführt, der ebenfalls mittels der Luftkonditionierungseinheit 10 bereitgestellt wird und der auf einem Druckniveau von beispielsweise 5 bis 20 bara vorliegt. Dieser Strom j wird nachfolgend auch als Mitteldruckluftstrom (MPAIR) bezeichnet.

In dem in Figur 1B veranschaulichten Energierückgewinnungszeitraum wird der Flüssigspeichereinheit 50 zuvor in dem Energiespeicherzeitraum gespeicherte, verflüssigte Luft (LAIR), also das Luftverflüssigungsprodukt, entnommen und mittels einer Pumpe 51 druckerhöht. Ein auf diese Weise gewonnener Strom m (HPLAIR) wird durch die Festbettkältespeichereinheit 20 geführt und dabei verdampft oder vom flüssigen in den überkritischen Zustand überführt ("entflüssigt"). Es wird also ein Entflüssigungsprodukt gebildet, aus dem, wie hier dargestellt vollständig, oder auch nur teilweise, ein Fluidstrom gebildet wird. Der Strom m liegt dabei auf einem vergleichbaren Druckniveau vor wie der bereits zuvor erläuterte Hochdruckluftstrom b. Auch bei dem durch die Verdampfung oder die Überführung von dem flüssigen in den überkritischen Zustand in der Festbettkältespeichereinheit 20 erhaltenen Strom n handelt es sich damit um einen Hochdruckluftstrom.

Aus dem Hochdruckluftstrom n wird in dem in Figur 1B veranschaulichten Energierückgewinnungszeitraum in der Energiegewinnungseinheit 60 ein Fluidstrom gebildet, der unter Verwendung von in einem Strom o der Energiegewinnungseinheit 60 zugeführtem Brennstoff (fuel) erwärmt und unter Gewinnung von elektrischer Energie entspannt wird. Auf diese Weise wird aus dem Fluidstrom, der auch seinerseits bereits druckbeaufschlagt sein kann, ein druckerhöhter Druckstrom gebildet. Wie auch nachfolgend veranschaulicht, kann die Entspannung und die Erwärmung eines entsprechenden Stroms in unterschiedlicher Weise erfolgen. Ein entsprechend entspannter Strom p liegt beispielsweise bei Atmosphärendruck (amb) vor und kann beispielsweise einer Abgasaufreinigung zugeführt werden.

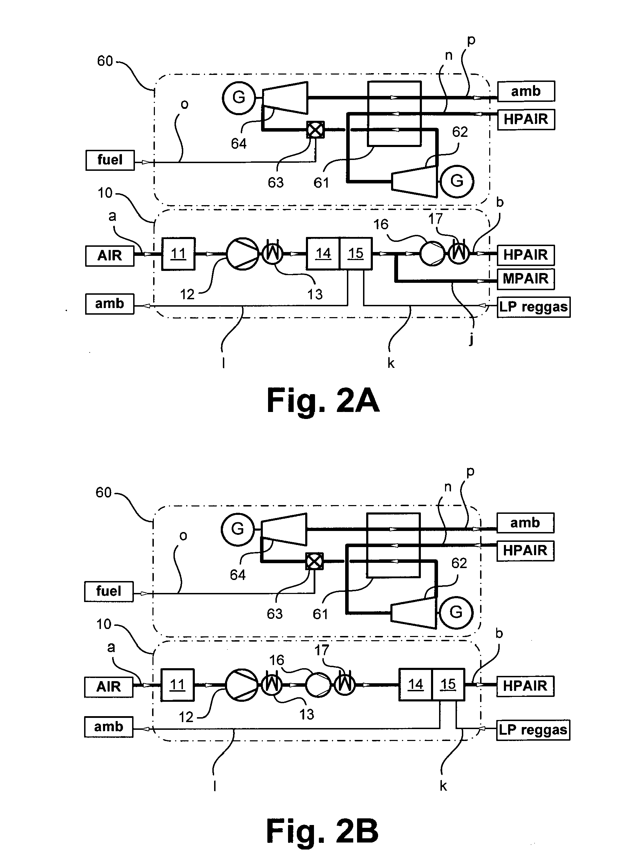

Die in den Figuren 2A bis 2F veranschaulichten Luftkonditionierungseinheiten 10 und Energiegewinnungseinheiten 60 sind zum Einsatz in Anlagen 100 gemäß unterschiedlicher Ausführungsformen der Erfindung vorgesehen, beispielsweise in der in den Figuren 1A und 1B gezeigten Anlage 100.

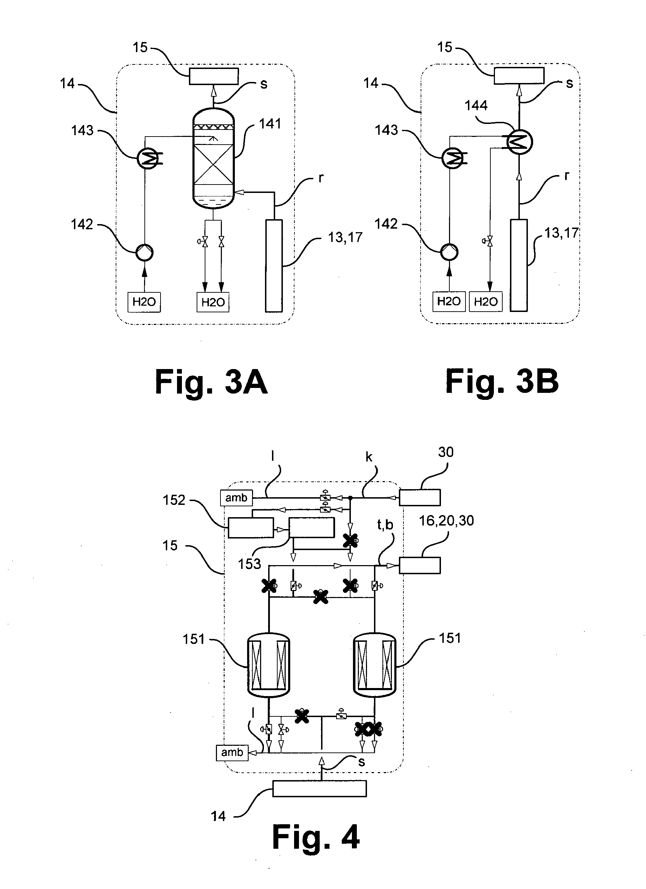

Gemäß der in Figur 2A gezeigten Ausführungsform wird der bereits erläuterte Strom a über ein Filter 11 mittels einer Verdichtereinrichtung 12, beispielsweise mittels eines mehrstufigen Axialverdichters, angesaugt und verdichtet. Nach Abkühlung in einer Nachkühleinrichtung 13, beispielsweise in einem mit Kühlwasser betriebenen Kühler 13, wird der verdichtete und danach abgekühlte Strom a einer Kühleinrichtung 14 und anschließend einer Luftreinigungseinrichtung 15 zugeführt. Beispiele für entsprechende Kühleinrichtungen 14 und Luftreinigungseinrichtungen 15 sind in den nachfolgenden Figuren 3A, 3B und 4 näher veranschaulicht.

Stromab der Luftreinigungseinrichtung 15 wird ein Teilstrom der Luft des Stroms a auf einem Zwischendruck als der bereits erläuterte Strom j entnommen. Nicht als Mitteldruckluftstrom j ausgeführte Luft des Stroms a wird in einer weiteren Verdichtereinrichtung 16 weiter verdichtet. Auch die Verdichtereinrichtung 16 kann als mehrstufiger Axialverdichter ausgebildet sein.

Im Rahmen der vorliegenden Erfindung können insbesondere die Verdichtereinrichtung 12 und die Verdichtereinrichtung 16 mit Luft auf gleicher Temperatur beschickt werden. Insbesondere können die Verdichtereinrichtungen 12 und/oder 16 isotherm betrieben werden. Stromab der Verdichtereinrichtung 16 ist eine weitere Nachkühleinrichtung 17 angeordnet. In der Verdichtereinrichtung 16 verdichtete und in der Nachkühleinrichtung 17 abgekühlte Luft wird als der bereits erläuterte Hochdruckluftstrom b bereitgestellt.

Zum Betrieb bzw. der Regeneration der Luftreinigungseinrichtung 15 kann dieser der bereits erläuterte Regeneriergasstrom k zugeführt und aus dieser der ebenfalls erläuterte Strom I ausgeführt werden.

Wie bereits unter Bezugnahme auf die Figuren 1A und 1B erläutert, werden der Hochdruckluftstrom b und der Mitteldruckluftstrom j durch die Luftkonditionierungseinheit 10 typischerweise nur in dem Energiespeicherzeitraum bereitgestellt. In diesem Energiespeicherzeitraum ist die Energiegewinnungseinheit 60 nicht in Betrieb. Umgekehrt ist in dem Energierückgewinnungszeitraum typischerweise nur die Energiegewinnungseinheit 60, nicht hingegen die Luftkonditionierungseinheit 10 in Betrieb. Die Figuren 2A bis 2F zeigen damit den Energiespeicherzeitraum und den Energierückgewinnungszeitraum in einer Darstellung.

In dem Energierückgewinnungszeitraum wird der Energiegewinnungseinheit 60 der Hochdruckluftstrom n zugeführt und in einem Rekuperatorsystem 61, das beispielsweise aus mehreren Wärmetauschern gebildet sein kann, erwärmt. Der erwärmte Hochdruckluftstrom n wird in einer Generatorturbine 62 unter Gewinnung von elektrischer Energie entspannt und anschließend erneut durch das Rekuperatorsystem 61 geführt und in diesem erwärmt.

Eine weitere Erwärmung des entspannten Hochdruckluftstroms n erfolgt mittels Brennstoff des Stroms o, der in einer Verbrennungseinrichtung 63, beispielsweise einer Brennkammer, verbrannt werden kann. Der entsprechend erwärmte Strom wird einer weiteren Generatorturbine 64 zugeführt und in dieser unter Gewinnung elektrischer Energie entspannt. Ein Teil der Wärme des in der Generatorturbine 64 entspannten Stroms wird in dem Rekuperatorsystem 61 auf die bereits erwähnten, durch dieses geführten Ströme übertragen. Stromab des Rekuperatorsystems 61 wird der in der weiteren Generatorturbine 64 entspannte Strom als Strom p, wie erwähnt, beispielsweise in einer Abgasaufreinigung aufgereinigt.

Die in Figur 2B veranschaulichte Variante unterscheidet sich hiervon im Wesentlichen in der Ausgestaltung der Luftkonditionierungseinheit 10. Insbesondere sind hierbei die Kühleinrichtung 14 und die Luftreinigungseinrichtung 15 stromab der Verdichtereinrichtung 16 und der zugehörigen Nachkühleinrichtung 17, also in einem Bereich höheren Drucks, angeordnet. Dies ist möglich, weil hier kein Mitteldruckluftstrom j gebildet wird, der ebenfalls aufgereinigt werden muss. Die Kühleinrichtung 14 und die Luftreinigungseinrichtung 15 sind auf einen entsprechenden höheren Druck ausgelegt. Dies ermöglicht es, wie erwähnt, die Luftreinigungseinrichtung 15 kleiner auszubilden.

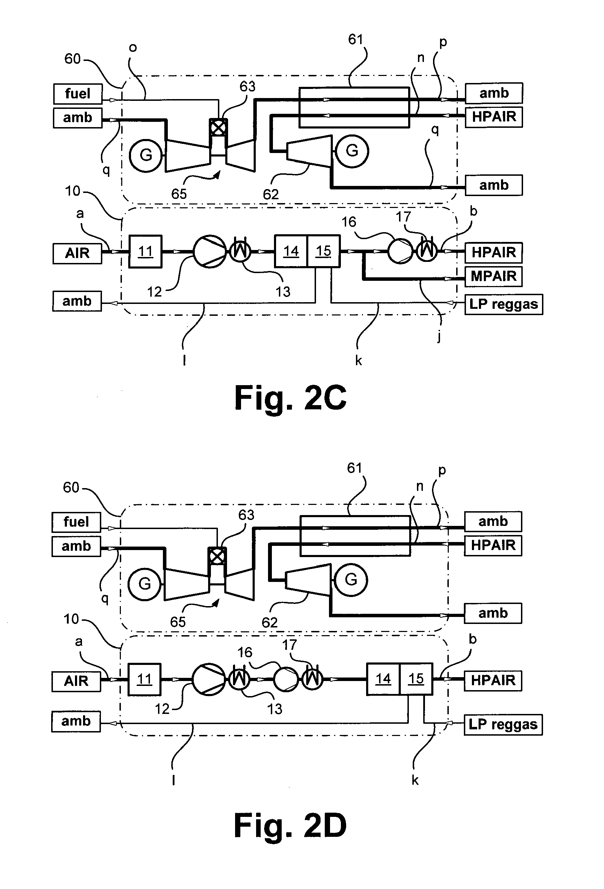

Die in Figur 2C veranschaulichte Variante entspricht hinsichtlich der Luftkonditionierungseinheit 10 im Wesentlichen der in Figur 2A veranschaulichten Variante. In der Energiegewinnungseinheit 60 ist jedoch eine Gasturbineneinheit 65 veranschaulicht, deren Verdichtungs- und Expansionsstufe über eine gemeinsame Welle mit einem Generator gekoppelt sein können, jedoch nicht einzeln bezeichnet sind. In der in Figur 2C veranschaulichten Variante wird der Hochdruckluftstrom n ebenfalls durch ein Rekuperatorsystem 61 geführt und in einer Generatorturbine 62 entspannt. Der entsprechend entspannte Strom, hier mit q bezeichnet, wird der Verdichtungsstufe der Gasturbineneinheit 65 zugeführt, anschließend in einer zwischengeschalteten Verbrennungseinrichtung 63 mit Brennstoff des Stroms o erwärmt und danach in einer Entspannungsstufe der Gasturbineneinheit 65 entspannt. Die in der Gasturbineneinheit 65 bzw. der Verbrennungseinrichtung 63 erzeugte Wärme wird zumindest zum Teil in dem Rekuperatorsystem 61 auf den Hochdruckluftstrom n übertragen.

Die in Figur 2D veranschaulichte Variante entspricht im Wesentlichen einer Kombination der in Figur 2B gezeigten Luftkonditionierungseinheit 10 mit der in der Figur 2C gezeigten Energiegewinnungseinheit 60. Zu Details sei daher auf die zuvor erläuterten Figuren 2B und 2C verwiesen.

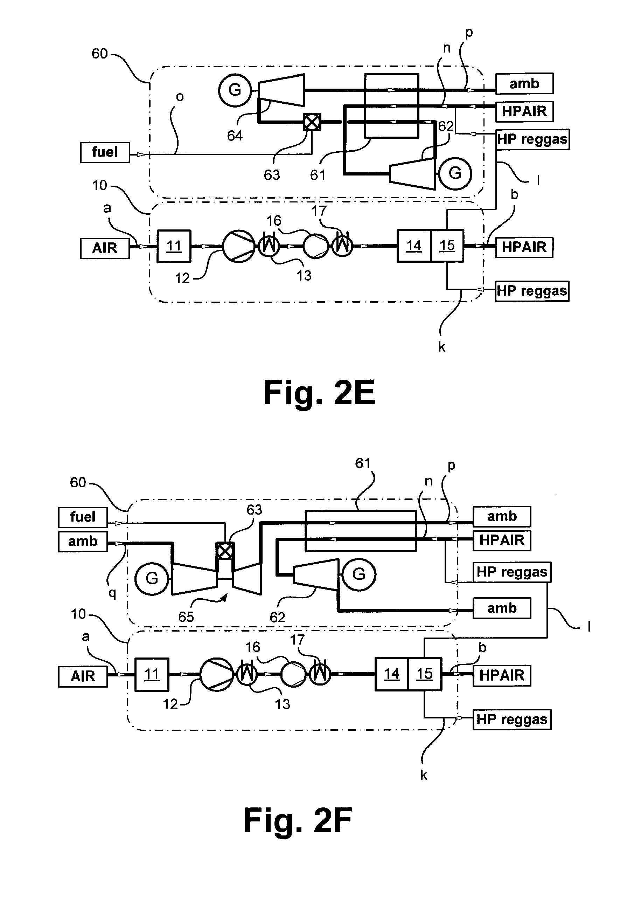

Die in der Figur 2E veranschaulichte Variante unterscheidet sich von der in der Figur 2B veranschaulichten Variante im Wesentlichen in der Verwendung des Regeneriergasstroms k. Dieser Regeneriergasstrom k wird in der in Figur 2E veranschaulichten Variante nicht als Niederdruckluftstrom sondern als Hochdruckluftstrom bereitgestellt. Er kann beispielsweise aus einem Teil des Hochdruckluftstroms n gebildet werden, d.h. während des Energierückgewinnungszeitraums. Der Regeneriergasstrom k wird hier zunächst durch die Luftaufreinigungseinrichtung 15 geführt (die in dem Energierückgewinnungszeitraum nicht reinigend in Betrieb ist und damit regeneriert werden kann) und anschließend mit dem Hochdruckluftstrom n vereinigt. In dem Strom I stromab der Luftreinigungseinrichtung 15 enthaltene Komponenten wie Wasser und Kohlendioxid erweisen sich aufgrund der in der Energiegewinnungseinheit 60 vorliegenden Temperaturen in der Regel als unproblematisch. Die in der Figur 2E veranschaulichte Variante hat den Vorteil, dass weniger verdichtete Luft verloren geht.

Die in Figur 2F veranschaulichte Variante umfasst ebenfalls die bereits erläuterte, abweichende Verwendung des Regeneriergasstroms k, die bereits in Figur 2E gezeigt ist. Wie in der Figur 2F dargestellt, eignet sich diese in gleicher Weise für die Verwendung mit einer Energiegewinnungseinheit 60 mit einer Gasturbineneinheit 65, nicht nur mit der in Figur 2E gezeigten Entspannung des Stroms n gemäß Figur 2A bzw. Figur 2B.

In Figur 3A ist eine Kühleinrichtung 14 für den Einsatz in einer Luftkonditionierungseinheit 10, wie sie beispielsweise in den zuvor gezeigten Figuren 2A bis 2F veranschaulicht ist, im Detail dargestellt. Die Kühleinrichtung 14 kann stromab der Nachkühleinrichtung 13 (vgl. Figuren 2A und 2C) bzw. stromab der Nachkühleinrichtung 17 (vgl. Figuren 2B, 2D, 2E und 2F) angeordnet sein. Ein entsprechender Strom, hier mit r bezeichnet, wird in einen unteren Bereich eines Direktkontaktkühlers 141 eingespeist. Der Strom r entspricht dabei dem entsprechend verdichteten Strom a (vgl. Figuren 2A bis 2F). In einem oberen Bereich des Direktkontaktkühlers 141 wird ein Wasserstrom (H2O), der mittels einer Pumpe 142 durch eine (optionale) Kühleinrichtung 143 geführt wird, eingebracht. Wasser kann aus einem unteren Bereich des Direktkontaktkühlers 141 abgezogen werden. Vom Kopf des Direktkontaktkühlers 141 wird ein entsprechend gekühlter Strom s abgezogen, der beispielsweise anschließend in eine Luftreinigungseinrichtung 15 (vgl. Figur 2A bis 2F) überführt werden kann.

Abweichend ist gemäß der in Figur 3B veranschaulichten Variante der Kühleinrichtung 14 kein Direktkontaktkühler 141 sondern ein Wärmetauscher 144 vorgesehen. Auch dieser Wärmetauscher 144 kann mit einem Wasserstrom, der mittels einer Pumpe 142 durch eine (optionale) Kühleinrichtung 143 geführt wird, betrieben werden.

In Figur 4 ist eine Luftreinigungseinrichtung 15, die sich insbesondere zum Einsatz in einer Luftkonditionierungseinheit 10, wie sie in den Figuren 2A bis 2D gezeigt ist, eignet, im Detail veranschaulicht. Ein beispielsweise aus einer Kühleinrichtung 14 (vgl. Figuren 2A bis 2D und Figur 3A und 3B) stammender, gekühlter Strom s kann hierbei im Wechselbetrieb durch zwei Adsorberbehälter 151, die beispielsweise Molekularsieb aufweisen, geführt werden. Der Strom s entspricht dabei dem entsprechend verdichteten und gekühlten Strom a (vgl. Figuren 2A bis 2D). In den Adsorberbehältern 151 werden insbesondere Wasser und Kohlendioxid aus dem Strom s entfernt. Ein entsprechend erhaltener Strom t, der beispielsweise im Fall der in den Figuren 2B und 2D veranschaulichten Ausführungsformen dem Strom b entsprechen kann, wird der jeweils stromab hiervon angeordneten Einrichtung, beispielsweise der nächsten Verdichtereinrichtung (vgl. Figuren 2A und 2C) bzw. der Festbettkältespeichereinheit 20 oder der Gegenstromwärmetauscheinheit 30 (vgl. Figuren 2B und 2D) zugeführt.

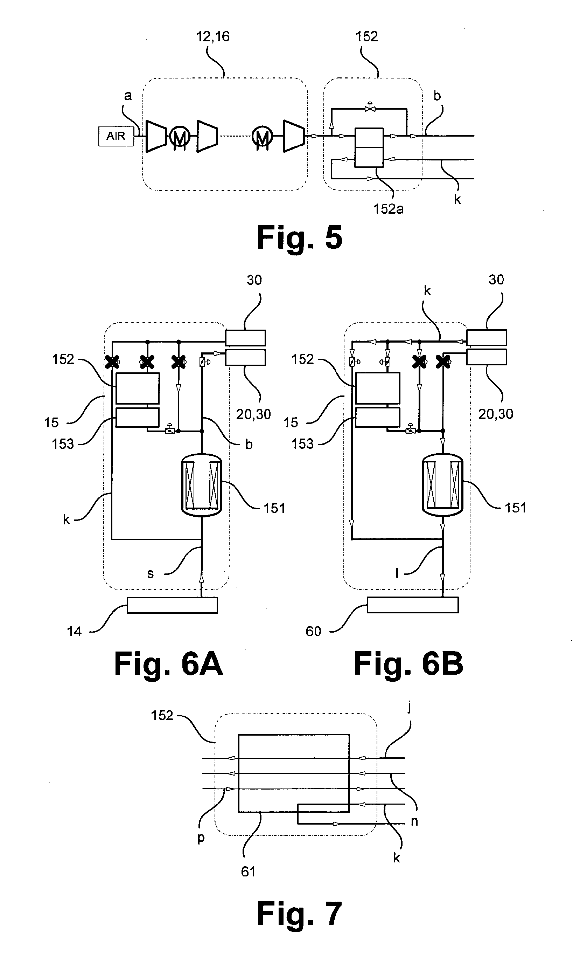

Der jeweils nicht zur Aufreinigung des Stroms s verwendete Adsorberbehälter 151 kann mittels des bereits erläuterten Regeneriergasstroms k regeneriert werden. Der Strom k kann dabei zunächst einer optionalen Regeneriergasvorheizeinrichtung 152 zugeführt werden, die in einem Beispiel in der nachfolgenden Figur 5 veranschaulicht ist. In einer nachgeschalteten Regeneriergasheizeinrichtung 153, die beispielsweise elektrisch und/oder mit Heißdampf betrieben werden kann, wird der Regeneriergasstrom k weiter erwärmt und durch den jeweils zu regenerierenden Adsorberbehälter 151 geführt. Stromab des zu regenerierenden Adsorberbehälters 151 liegt ein entsprechender Strom I vor. Gleiches gilt, wenn zu dem dargestellten Zeitpunkt kein Regeneriergas benötigt wird, weil in diesem Fall ein entsprechender Strom I direkt aus der Luftreinigungseinrichtung 15 ausgeführt wird (siehe Strom I im oberen Teil der Figur 4).

In Figur 5 ist insbesondere der Betrieb einer Regeneriergasvorheizeinrichtung 152 gemäß einer Ausführungsform der Erfindung veranschaulicht. Die Regeneriergasvorheizeinrichtung 152 kann beispielsweise eine der Nachkühleinrichtungen 13 bzw. 17 ersetzen oder ergänzen und damit stromab einer Luftverdichtereinrichtung 12 bzw. 16 angeordnet sein. Ein aufgrund einer entsprechenden Verdichtung angewärmter Luftstrom kann durch einen Wärmetauscher 152a der Regeneriergasvorheizeinrichtung 152 oder an dieser vorbei geleitet werden und dabei Wärme auf einen Regeneriergasstrom k übertragen.

In den Figuren 6A und 6B sind Luftreinigungseinrichtungen 15 gezeigt, die sich insbesondere für die in den Figuren 2E und 2F veranschaulichten Ausführungsformen der vorliegenden Erfindung bzw. die in diesen gezeigten Luftkonditioniereinrichtungen eignen. In den Figuren 6A und 6B sind der Energiespeicherzeitraum (Figur 6A) und der Energierückgewinnungszeitraum (Figur 6B) veranschaulicht, wobei in dem Energiespeicherzeitraum eine Aufreinigung eines entsprechenden Stroms s erfolgt. Weil in dem Energierückgewinnungszeitraum einer entsprechenden Anlage 100 keine Luft in Form des Stroms a zugeführt wird und damit die Luftkonditioniereinrichtung 10 nicht in Betrieb ist, steht ein entsprechender Adsorberbehälter 151 in derartigen Zeiten zur Regenerierung zur Verfügung. Die in den Figuren 6A und 6B veranschaulichte Ausführungsform hat daher den besonderen Vorteil, dass nur ein entsprechender Adsorberbehälter 151 vorgesehen sein muss und nicht zwei, die gemäß Figur 4 im Wechselbetrieb gefahren werden. Dies erfordert, wie in den Figuren 2E und 2F gezeigt, die Bereitstellung eines entsprechenden Regeneriergasstroms k während des Energierückgewinnungszeitraums.

Auch hier kann ein Regeneriergasstrom k in einer optionalen Regeneriergasvorheizeinrichtung 152, die in Figur 7 im Detail veranschaulicht ist, vorgeheizt und in einer Regeneriergasheizeinrichtung 153 erhitzt werden.

In dem in der Figur 6B veranschaulichten Energierückgewinnungszeitraum wird damit entsprechend erwärmtes Regeneriergas durch den Adsorberbehälter 151 geführt, in dem Energiespeicherzeitraum steht dieser Regeneriergasbehälter 151 zur Aufreinigung des Stroms s zur Verfügung.

In Figur 7 ist, wie erwähnt, eine Regeneriergasvorheizeinrichtung 152 veranschaulicht, die sich für den Einsatz in der in den Figuren 6A und 6B gezeigten Luftreinigungseinrichtung 15 in besonderer Weise eignet. Der Regeneriergasstrom k wird hierbei durch das bereits in den Figuren 2E und 2F veranschaulichte Rekuperatorsystem 61 im Gegenstrom zu dem erläuterten Strom n (und zusätzlich zu dem Mitteldruckluftstrom j) geführt.

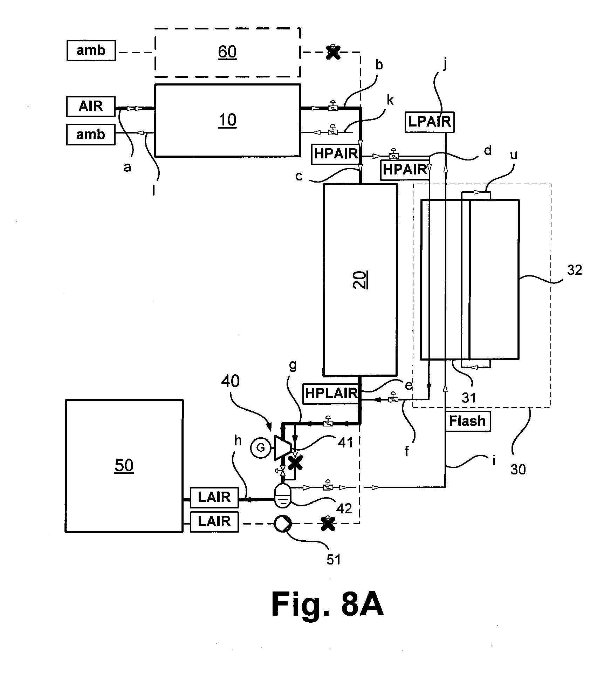

Die Figuren 8A bis 8C veranschaulichen Anlagen gemäß bevorzugter Ausführungsformen der Erfindung jeweils in dem Energiespeicherzeitraum. Die Anlagen entsprechen dabei bezüglich der Festbettkältespeichereinheit 20, der Kältegewinnungseinheit 40, der Flüssigspeichereinheit 50 und der Energiegewinnungseinheit 60 im Wesentlichen den zuvor erläuterten Ausführungsformen, unterscheiden sich jedoch insbesondere hinsichtlich der Gegenstromwärmetauscheinheit 30, die daher im Folgenden erläutert wird.

Gemäß der in Figur 8A veranschaulichten Ausführungsform kann die Gegenstromwärmetauscheinheit 30 beispielsweise mittels eines Stroms u betrieben werden, der vom kalten Ende zum warmen Ende durch einen oder mehrere Wärmetauscher 31 der Gegenstromwärmetauscheinheit 30 geführt wird.

Zur Bereitstellung des Stroms u kann beispielsweise ein separater Verflüssigungsprozess 32 implementiert sein, der mittels eigener, d.h. zusätzlich zur Luftkonditionierungseinheit 10 bereitgestellter, Verdichter betrieben wird.

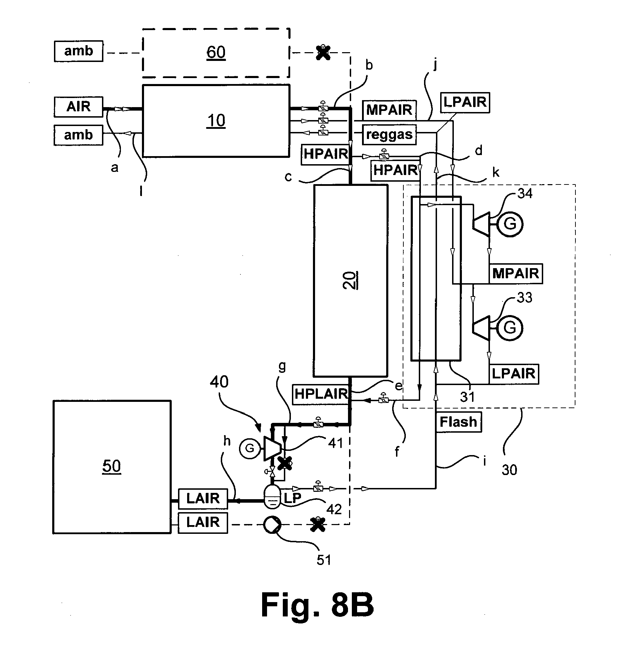

In der in Figur 8B gezeigten Ausführungsform, die im Wesentlichen der in den Figuren 1A und 1B gezeigten Ausführungsform entspricht, kann hingegen der Gegenstromwärmetauscheinheit 10 ein Mitteldruckluftstrom j zugeführt und am warmen Ende in den Wärmetauscher 31 eingespeist werden. Der Strom j kann dem Wärmetauscher 31 bei einer Zwischentemperatur entnommen und in einer Generatorturbine 33 entspannt werden. Ein weiterer Teilstrom des Hochdruckluftstroms b bzw. seines Teilstroms d kann ebenfalls bei einer Zwischentemperatur dem Wärmetauscher 131 entnommen und in einer weiteren Generatorturbine 34 entspannt werden. Die genannten Ströme können vereinigt und gemeinsam durch die Generatorturbine 33 geführt werden. Durch die Entspannung freiwerdende Kälte wird zur Verflüssigung des Stroms c (siehe Figuren 1A und 1B) genutzt, indem entsprechende Ströme dem Wärmetauscher 31 zusammen mit dem bereits erläuterten Strom i kaltseitig zugeführt werden.

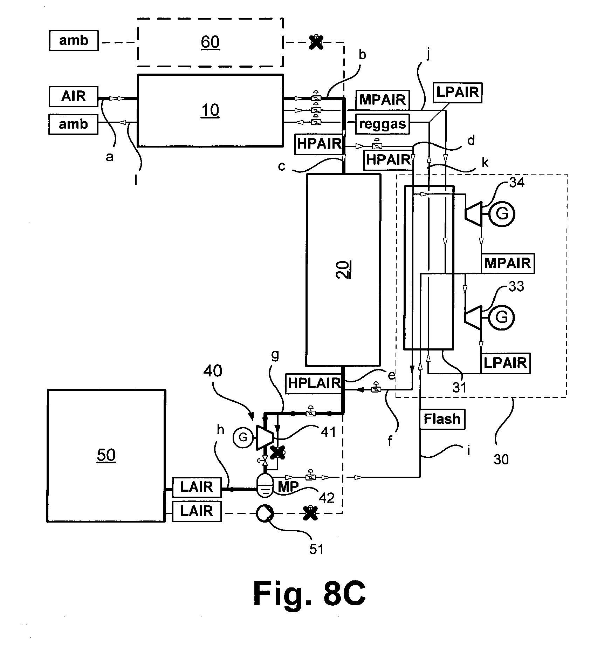

In einer in Figur 8C gezeigten Variante wird der Strom i dem Wärmetauscher 31 der Gegenstromwärmetauscheinheit 30 kaltseitig zugeführt, bei einer Zwischentemperatur entnommen, mit dem Mitteldruckluftstrom j, der ebenfalls bis zu einer Zwischentemperatur durch den Wärmetauscher 31 geführt wurde, vereinigt, und anschließend in der Generatorturbine 33 entspannt. Zuvor kann entsprechende Luft mit einem Teilstrom des Stroms c vereinigt werden, wie bereits in Figur 8B dargestellt.

Die in den Figuren 8B und 8C veranschaulichten Ausführungsformen eignen sich insbesondere für die Verwendung von auf unterschiedlichen Druckniveaus vorliegenden Strömen i.

## Patentansprüche

1. Verfahren zum Speichern und Rückgewinnen von Energie, bei dem in einem Energiespeicherzeitraum ein Luftverflüssigungsprodukt (LAIR) gebildet und in einem Energierückgewinnungszeitraum unter Verwendung zumindest eines Teils des Luftverflüssigungsprodukts (LAIR) ein Druckstrom gebildet und arbeitsleistend entspannt wird, wobei das Verfahren umfasst,
zur Bildung des Luftverflüssigungsprodukts (LAIR)
- Luft (AIR) in einer Luftkonditioniereinheit (10) zumindest mittels wenigstens einer isotherm betriebenen Verdichtereinrichtung (12, 16) zu verdichten und mittels wenigstens einer adsorptiven Reinigungseinrichtung (15) auf einem überatmosphärischen Druckniveau adsorptiv zu reinigen,
- die verdichtete und adsorptiv gereinigte Luft (HPAIR) ausgehend von einem Temperaturniveau in einem Bereich von 0 bis 50 °C z u einem ersten Anteil in einer Festbettkältespeichereinheit (20) und zu einem zweiten Anteil in einer Gegenstromwärmetauscheinheit (30) auf einem Verflüssigungsdruckniveau in einem Bereich von 40 bis 100 bara zu verflüssigen, und
- die verflüssigte Luft (HPLAIR) anschließend in wenigstens einer Kältegewinnungseinheit (40) zu entspannen,
und zur Bildung des Druckstroms
- aus zumindest einem Teil des Verflüssigungsprodukts (LAIR) bei einem Entflüssigungsdruckniveau, das um nicht mehr als 5 bar von dem Verflüssigungsdruckniveau abweicht, in der Festbettkältespeichereinheit (20) ein Entflüssigungsprodukt (HPAIR) zu erzeugen, und
- aus zumindest einem Teil des Entflüssigungsprodukts (HPAIR) einen Fluidstrom zu bilden und durch wenigstens eine Verbrennungseinrichtung (63) zu führen, in der ein Brennstoff verbrannt wird.

2. Verfahren nach Anspruch 1, das umfasst, den durch die wenigstens eine Verbrennungseinrichtung (63) geführten Fluidstrom als den Druckstrom in wenigstens einer Generatorturbine (64) zu entspannen.

3. Verfahren nach Anspruch 2, das umfasst, als die wenigstens eine Generatorturbine wenigstens eine Entspannungsturbine wenigstens einer Gasturbineneinheit (65) zu verwenden.

4. Verfahren nach einem der vorstehenden Ansprüche, das umfasst, den Fluidstrom vor dem Führen durch die Verbrennungseinrichtung (63) zumindest einmal zu erwärmen, zu entspannen und/oder zu verdichten.

5. Verfahren nach einem der vorstehenden Ansprüche, das umfasst, der wenigstens einen adsorptiven Reinigungseinrichtung (15) ein Regeneriergas zuzuführen, das aus einem Teil der zuvor in der Luftkonditioniereinheit (10) verdichteten und adsorptiv gereinigten Luft (HPAIR) gebildet wird.

6. Verfahren nach Anspruch 5, das umfasst, das Regeneriergas während des Energiespeicherzeitraums aus zumindest einem Teil eines bei der Entspannung der verflüssigten Luft (HPLAIR) gebildeten Verdampfungsprodukts zu bilden.

7. Verfahren nach Anspruch 5, das umfasst, das Regeneriergas während des Energierückgewinnungszeitraums aus zumindest einem Teil des Entflüssigungsprodukts (HPAIR) zu bilden.

8. Verfahren nach einem der vorstehenden Ansprüche, das umfasst, ein bei der Entspannung der verflüssigten Luft (HPLAIR) gebildetes Verdampfungsprodukt durch die Gegenstromwärmetauscheinheit (30) zu führen.

9. Verfahren nach einem der vorstehenden Ansprüche, das umfasst, wenigstens einen Kälteträger durch die Gegenstromwärmetauscheinheit (30) zu führen, der mittels eines externen Kältekreislaufs bereitgestellt und/oder durch Entspannen aus einem Teil der in der Luftkonditioniereinheit (10) verdichteten und adsorptiv gereinigten Luft (HPAIR) gebildet wird.

10. Anlage (100), die zum Speichern und Rückgewinnen von Energie durch Bilden eines Luftverflüssigungsprodukts (LAIR) in einem Energiespeicherzeitraum und Erzeugen und arbeitsleistendes Entspannen eines unter Verwendung zumindest eines Teils des Luftverflüssigungsprodukts (LAIR) gebildeten Druckstroms in einem Energierückgewinnungszeitraum eingerichtet ist, wobei die Anlage (100) Mittel aufweist, die dazu eingerichtet sind,
zur Bildung des Luftverflüssigungsprodukts (LAIR)
- Luft (AIR) in einer Luftkonditioniereinheit (10) zumindest mittels wenigstens einer isotherm betriebenen Verdichtereinrichtung (12, 16) zu verdichten und mittels wenigstens einer adsorptiven Reinigungseinrichtung (15) auf einem überatmosphärischen Druckniveau adsorptiv zu reinigen,
- die verdichtete und adsorptiv gereinigte Luft (HPAIR) ausgehend von einem Temperaturniveau in einem Bereich von 0 bis 50 °C z u einem ersten Anteil in einer Festbettkältespeichereinheit (20) und zu einem zweiten Anteil in einer Gegenstromwärmetauscheinheit (30) auf einem Verflüssigungsdruckniveau in einem Bereich von 40 bis 100 bara zu verflüssigen, und
- die verflüssigte Luft (HPLAIR) anschließend in wenigstens einer Kältegewinnungseinheit (40) zu entspannen,
und zur Bildung des Druckstroms
- aus zumindest einem Teil des Verflüssigungsprodukts (LAIR) bei einem Entflüssigungsdruckniveau, das um nicht mehr als 5 bar von dem Verflüssigungsdruckniveau abweicht, in der Festbettkältespeichereinheit (20) ein Entflüssigungsprodukt (HPAIR) zu erzeugen, und
- aus zumindest einem Teil des Entflüssigungsprodukts (HPAIR) einen Fluidstrom zu bilden und durch wenigstens eine Verbrennungseinrichtung (63) zu führen, in der ein Brennstoff verbrannt wird.

11. Anlage (100) nach Anspruch 10, die Mittel aufweist, die zur Durchführung eines Verfahrens nach einem der Ansprüche 1 bis 9 eingerichtet sind.
